# EUROPEAN PATENT SPECIFICATION

(11) **EP 3 345 057 B1**
(45) Date of publication and mention of the grant of the patent: **25.03.2020**
(21) Application number: 16753318.1
(22) Date of filing: 09.08.2016
(51) Int. Cl.: G05B 15/02, H05B 37/02

(54) **SYSTEM, DEVICE AND METHOD FOR AUTOMATIC COMMISSIONING OF APPLICATION CONTROL SYSTEMS**
SYSTEM, VORRICHTUNG UND VERFAHREN ZUR AUTOMATISCHEN INBETRIEBNAHME VON ANWENDUNGSSTEUERUNGSSYSTEMEN
SYSTÈME, DISPOSITIF ET PROCÉDÉ DE MISE EN SERVICE AUTOMATIQUE DE SYSTÈMES DE COMMANDE D'APPLICATION

(30) Priority: 31.08.2015 EP 15183115
(43) Date of publication of application: 11.07.2018
(73) Proprietor: Signify Holding B.V., 5656 AE Eindhoven (NL)
(72) Inventor: KAAG, Bjorn, Christiaan, Wouter, 5656 AE Eindhoven (NL); WOUTERS, Cornelis, Bernardus, Aloysius, 5656 AE Eindhoven (NL)
(74) Representative: Verweij, Petronella Daniëlle
(86) International application number: PCT/EP2016/068963
(87) International publication number: WO 2017/036747

(56) References cited:
- WO-A1-2014/108817
- WO-A1-2015/036912
- WO-A2-2007/029186
- US-A1- 2006 202 851
- US-A1- 2011 031 897
- US-A1- 2014 365 018

## Description

### FIELD OF THE INVENTION

The present invention relates to the field of application control systems, in particular to the commissioning process of application control systems such as lighting control systems.

### BACKGROUND OF THE INVENTION

In recent years application systems, such as lighting systems, environmental control systems etc, are controlled via application control networks using a control plan providing information about the presence and interaction of the application devices of the application system.

From US 2014/0365018 A1 a system for controlling a plurality of appliances within a building is known, wherein the plurality of appliances are controlled by an external server which determines one or more appliances to be present in the same room and controls the respective appliances based on environmental information previously received from the plurality of appliances.

Application devices, such as sensors and actuators communicate with one another as well as with other network entities via data messages send either wired or wirelessly over the network. A sensor for instances may sense a signal, formulate a data message with the data of the signal and/or information about the precise signal and transmit this signal over the control network to an actuator, which subsequently switches an electrical load, such as for example a light. In order to enable communication of a (subset of) sensor(s) interacting with (a subset of) actuator(s) via a communication work relationship, interaction rules have to be defined during the so called commissioning of the system. In other words, commissioning is the logical installation of components of a physical control system, such that they can interact with each other.

From WO 2007/029186 A2 a lighting commissioning device and method including a lighting commissioning device are known, wherein the lighting commissioning device includes an indication detector responsive to indication from the lighting device and generating a lighting device indication signal, a change detector responsive to the lighting device indication signal and generating an indication detected signal.

From WO 2015/036912 A1 it is known to use an autonomous vehicle for commissioning a light source in a light system comprising a plurality of light sources capable of emitting coded light.

From US 2011/0031897 A1 a method is known in which a plurality of light sources installed in the same area are commissioned, wherein the detection of light from a co-located light source is used to determine a distance from that light source.

Usually, information about a unique identification of the system component, such as sensors and/or actuator is required prior to commissioning. The identification of application devices within a control system can be done in a variety of ways, such as for example a physical hardware address (e.g. an Ethernet style MAC address or EIB address), and RFID tag, a unique code that is transmitted via coded light, etc. The physical addresses may be used directly or the control applications may be decoupled via a logical address, that is assignable by a trust agent in the network according to specific rules (e.g. DHCP agent to assign logical IP addresses to physical Ethernet style hardware addresses or manual assignment using tools such as graphical computer programs to assign logical addresses to physical EIB addresses).

Other technologies exist to support "service discovery", to facilitate that application devices can make themselves known in a computer network. An example is UPNP, where a control point or actuator can advertise its presence.

However, in modern application control systems more complex control instructions are desired. For instance, in a lighting control system, upon detection of a person entering a room by a presence detector a plurality of loads is supposed to be switched on. Therefore, a corresponding control scene needs to be defined that associates the presence detector with the plurality of loads. These so-called (lighting) control scenes must be assigned by hand, and may need additional information about the exact location in a building plan, the times and durations when they are switched on, switched off or should remain idle. This information may require cumbersome manual labor.

Recently a new type of lighting control network has been realized that sends lighting control commands via wired Ethernet which also electrically powers the light via the Power Over Ethernet (i.e. PoE) protocol. Alternatively a data communication network, wired or wireless, of any standard or topology may be used to carry control commands, and the power to support the electrical load could be delivered by that communication medium or via a separate power transmission medium, such as e.g. a power grid, or could be provided from an energy storage.

Considering the type of lighting control networks, where a communication medium transfers the control data between sensors and actuators, the installation of such networks inside buildings often relies on manual labor to populate the data forwarding tables in the data-switches and routers in the wired data communication network. This manual labor is done by system administrators using proprietary computer applications. With those applications, which may be different per brand of data switch, the system administrators enter the required filtering data in one or more data switches. This data is stored in tables inside the data switches and it represents the forwarding information database and the routing information database. In short: the data tables contain the essential information what data must be forwarded and how. That network is not automatically (re) programmed to cope with changes in the use of the building. In each case of a change in usage the network and the respective data-switches and routers must be reprogrammed by the system administrators.

### SUMMARY OF THE INVENTION

The objective of the present invention is to provide an improved system, device and method for reliably commissioning lighting devices within a lighting control network. Furthermore, the system, device and method should scale well with the size of the lighting network without creating large overhead concerning the managing information and maintenance work.

The objective is achieved by a system, a device, a method and a computer program according to the independent claims. The invention is defined in the claims. According to the present invention, the application concerns a lighting system. The application devices are lighting devices of a lighting control network, the application plan is a lighting plan and the application scene is a lighting scene.

Instead of relying on a direct physical identification of the application devices installed at a specific position, e.g. in a building, the commissioning is based on feedback on trigger events and relative positions of the application devices.

In a first aspect there is provided a system comprising a commissioning base station adapted to access an application plan, wherein the application plan may be empty or comprise one or more application plan entries and scenes and a commissioning device communicatively connected with the commissioning base station and adapted to determine a position within a bounded area detected by the commissioning device of a first application device that is coupled with the commissioning base station via an application network. The commissioning device is further adapted to trigger a reaction of the first application device and the commissioning base station is adapted to create a corresponding application plan entry for the first application device upon verification of the reaction, to locate the first application device in a network graph representing the network topology upon occurrence of the reaction of the first application device, to determine at least a second application device in the vicinity of the first application device in the network graph and to trigger the second application device. The commissioning device is then further adapted to determine a position of the second application device within a bounded area upon detecting a reaction of the triggered second application device. The system is further adapted to create an application plan entry for the second application device and an application scene entry associating the first application device with the second application device.

An application plan comprises information about the application equipment installed in a particular room or area. The plan may be depicted as a 2D sketch of a building, but may also take any other form representing the respective information, e.g. positions of specific application equipment. The identification of an application device within the application plan is referred to as application plan entry. In complex application control environments the corresponding application plan may comprise application scenes defining a recipe how to control the application. For instance, if application device A is operated, send the signal to a specific destination, after a specific time, etc. or, if application device A is operated, operate application devices B, C and D in a specific manner, e.g. for a specific duration, in a specific mode etc. The specific application scenes highly depend on the application control system, such as a lighting control system, an environmental control system, a security control system, a healthcare system etc. The system may start operation without prior knowledge concerning the application environment and/or equipment, e.g. building plans, application plans, equipment lists comprising identifiers about the installed equipment. However, it is possible and may be advantageous to supply prior information in order to enhance the resolution and/or speed up the commissioning process. The system will automatically commission the application equipment, eliminating many steps of manual labour in the configuration of the application management and building/facility/area management system. The system may determine a relative position of an application device by determining a bounded area, e.g. by providing a geo-fence, and determine relative coordinates with respect to a particular fix point. The relative coordinate system of the bounded area, such as a room, may be stored as a room plan, whereas multiple rooms will be combined into a building plan of an inspected building. The system may enter the positions of the application equipment into this building plan. If the application device is a sensor or detector, triggering of the detector may be initiated by the commissioning device, e.g. by submitting a corresponding signal to be de detected by the detector. The detector should submit a corresponding signal to the data communication network, which may be detected by the commissioning base station or directly by the commissioning device, depending on the implemented communication links. The signal provided by the detector in reaction to the trigger gives feedback to the commissioning device. This association can be used to determine that the triggered detector is located inside or at least nearby the geo-fence of the present room. The association may use the relative coordinate system representing the room. No specific identification of the sensor is required. An exemplary field of application of such sensors may be healthcare systems. In a hospital a thorough traffic analysis can help to determine optimal work flows. IR sensors (for example passive IR presence detectors) may be installed in corridors and rooms in the hospital. The database less commissioning demands that the sensors are commissioned without any additional identification data, but by associating the presence of the commissioning device in a room observing the status change of the sensor it just triggered. In a first step the commissioning tool must recognize that there is a sensor present in a room. That may either be determined via optical analysis of the room or the commissioning device may submit signals and look for reflections are other indications to prove the presence of the sensor within the same room. The commissioning device then triggers the sensor, in case of a blind search this may be the first step. The commissioning base station observes the reception of a signal sent by the sensor and confirms the reception of the message back to the commissioning device. That way the system can associate the relative coordinates as learned from the commissioning device with the corresponding identification data on said senor to create an application plan entry. Optionally, an application scene may be defined for the sensor, e.g. a particular destination device to transmit the sensor data to. Such an application scene may be added any time after creation of the application plan entry, either by a system admin or by an application control system.

If the application device is an electrical load, changing its status upon receiving input from the application control system, e.g. upon receipt of a command provided in response to a particular detection of an event, the commissioning device may trigger a request to change the status of a particular application device inside the geo-fence of the conceptual room. Information extracted from a corresponding network graph may be exploited to determine nearby devices as will be explained in more detail herein below. In the exemplary lighting application, a light may be controlled to change status by blinking, varying colour or brightness or a combination thereof. Associating the blinking light to the relative coordinate system of the geo-fence, may be used to create a lighting plan entry for the respective light. In case that more than one application device is present in the relevant area, the commissioning device will store an application plan entry upon detecting that the lamp actually changing status corresponds with the lamp that the commissioning device intended to associate is found. In both examples, feedback and a relative position of an application device is used to determine an application plan entry. The commissioning device and/or commissioning base station may cache information when the data-link between them is intermittent and use data protocols to recover when the data-link is re-established.

Application device may not be limited to end devices in an application system, such as lights and sensors/actuators in a lighting system. The commissioning device may also be used to commission data forwarding devices in the communication network which build the application networks backbone system. In case the data forwarding devices are installed behind ceiling or wall plates, the commissioning would have to take place during construction. However, in modern buildings cover plates are often not installed such that the commissioning could also take place at later point in time. In order to allow the commissioning device to identify a data forwarding device, the data forwarding device would have to be provide with some functionality to indicate a change in operation. For instance, the data forwarding device may be provided with a small status indicator such as an LED or the like which may visually indicate a change in status, e.g. by changing light from red to green or by blinking, etc. As for the end devices, the commissioning tool can record the location of the data forwarding device allowing a fast allocation of a respective data forwarding device in case any malfunction is detected for the data forwarding device.

The system is adapted to interact with the commissioning base station to trigger a reaction of the second application device and to verify that the reaction occurred and wherein the commissioning device is adapted to determine a position of the lighting device and the system is adapted to create an application plan entry for the second application device and to create an application scene entry associating the first application device with the second application device. Taking the example of a lighting application within a room, the associations between for example a presence detector as first application device and at least a corresponding light inside the conceptual geo-fence of the same room may be stored as a lighting scene in the lighting plan (of the room and/or building or another granularity). Another exemplary application scene could be the light switches inside the geo-fence of a room associated with the lights inside the geo-fence of the room. Association between application devices may automatically store other pre-selected settings such as for example but not limited to different levels of brightness, colour, on/off timer, etc. depending on the particular application control system. The commissioning device may further measure specific settings, such as for example the light intensity in a room when all commissioned lights inside the room are switched on, the system may be enabled to correct these settings, based on gathered or predetermined knowledge on each room as well as in combination with other room settings. In order to further improve the decision of the required correction the commissioning device may work together with an application logic, such as a software defined application control to identify the ideal lighting brightness in each room and may automatically adapt the lighting plan accordingly. In large installations the system would need to cycle through all non-commissioned application devices, which may take quite some time at the beginning. To improve scaling of the system in large, complex installations, the system could be enabled to remember the action when the first application device, e.g. a detector controlling activation of one or more second application devices, was triggered inside the same geo-fence of a room. When corresponding second application devices are to be commissioned, a network graph representing the data communication network coupling the application devices, could be exploited to locate the region in the graph in which the trigger from the sensor came from. A subset of second application devices may be located in the vicinity of the located position in the network graph to be cycled next to find the requested associations.

Preferably, the commissioning device is an autonomous vehicle, in particular a ground based vehicle, a marine vessel or an aerial vehicle. Wherein the commissioning device may also be positioned manually from one area to the next, having an autonomous vehicle provides the further advantage of reducing manual interaction even further, such that the commissioning could be performed for instance at night when no one is in the building. Accordingly, no one would be disturbed by the commissioning procedure which may be especially interesting for maintenance operations which require a re-commissioning.

Preferably, the base station is adapted to determine that the second application device is in the vicinity of the first application device based on an analysis of a network graph upon occurrence of the reaction of the first application device. The reaction of the first application device may be used to locate the device within a network graph representing the network topology. Upon localization of the first application device within the network graph it is possible to determine network devices in the vicinity, for instance connected to the same data forwarding devices (proxies or relays). The probability that devices connected to the same data forwarding devices within the network are also installed in physical vicinity is enhanced. Thus, analysis of the network graph may help detecting second application devices in the physical vicinity and thus increase the efficiency of the system. Furthermore, the base station may be stationary or moving, e.g. the base station may be a stationary server, located at a fixed location or may be moving, e.g. as a portable device such as a laptop.

Preferably, creating an application plan entry or application scene comprises updating an existing application plan entry or application scene. Wherein the system may be used to commission a system from scratch, the system may also be used to update existing application plans, for instance if application equipment has been added or moved.

In another aspect, there is provided a commissioning device comprising an imaging module, a situational awareness module and a communication interface enabling communication with a commissioning base station. The situational awareness module is adapted to process data provided by the imaging module to construct a relative coordinate system and geo-fence of a bounded area, to detect a sensor device communicatively coupled with the commissioning base station within the bounded area and to determine the position of the sensor device within the bounded area. The commissioning device is configured to trigger a reaction of the sensor device receivable by the commissioning base station via an application network to assist in creating a corresponding application plan entry for the application devices upon verification of the reaction by the commissioning base station to, to detect a reaction of a lighting device triggered by the commissioning base station that is communicatively coupled with lighting device, and assist in creating an application plan entry for the lighting device and an application scene entry associating the sensor device with the lighting device. The commissioning device will use an imaging module, such as camera which may additionally contain a range finder to construct a relative coordinate system of a room or otherwise bounded area to determine a geo-fence representing the room's dimensions. Furthermore, the imaging system may be exploited to determine which application devices are present in the room by running a search algorithm to analyse the input received from the imaging module.

Preferably, the imaging module comprises an imaging sensor, a laser range finder, a laser scanner or combinations thereof.

Preferably, the commissioning device further comprises a motion control system connected to the situational awareness module and/or receiving input from a navigational module wherein the control system is adapted to control autonomous movements of the commissioning device. On the basis of a construction drawing of the building or even without a construction drawing using only a navigation algorithm it will be made possible to deploy a commissioning device that visits and explores all rooms on a(ny) level of a building.

Preferably, the commissioning device further comprises a micro processor, a memory module and a storage module, wherein the microprocessor is adapted to run the motion control system, the situational awareness module, the navigation module or combinations thereof.

Preferably, the commissioning device further comprises a directional antenna for communication with the commissioning base station. The use of directional antennas can greatly enhance the distance between the commissioning device and the network's wireless access point. Present art equipment exists to create a data link between a model airplane and a directional antenna. The model airplane detects a GPS signal and transmits its 3D GPS coordinate to the antenna during flight. The antenna can rotate on a gimballed platform and directs itself in 3D towards the position of the model airplane based on the coordinates of the model airplane. This works fine but requires GPS coordinate which cannot be received inside a building. Therefore, the relative coordinate system of the commissioning device may be used to compute a bearing for the directional antenna of a wireless data link that is connected with the commissioning base station. The directional antenna of wireless data link could then blindly transmit through walls and/or ceilings to the roving commissioning device to maintain the data link, and when lost the commissioning device may revisit a location where it still had a functioning data link. A mobile RF relay commissioning device may extend the range, and the system will direct the RF relay commissioning device where to position itself based on the relative coordinates of the participants and the reception quality. Backup positions can also be transmitted.

In yet another aspect there is provided a method for commissioning an application device within an application control network comprising at least a first application device coupled with a commissioning base station via the application control network; wherein the method comprises:
- determining by a commissioning device a bounded area and create a relative coordinate system and geo-fence of the bounded area;
- triggering an event resulting in a reaction of the first application device;
- determining by a commissioning device a position of the first application device within the relative coordinate system, creating an application plan entry for the first application device to be stored in the application plan upon detection of the reaction, and
- locating the first application device in a network graph representative of the network topology, and
- determining at least a second application device in the vicinity of the first application device in the network graph;
- triggering a reaction of the second application device;
- determining by a commissioning device a position of the second application device within the relative coordinate system, and
- creating an application plan entry for second application device to be stored in the application plan and an application scene entry associating the first application device with the second application device.
The application scene may define any association of two application devices, for instance a paring of a sensor and at least one actuator but also, pairings of two or more sensors or two more actuators depending on a specific application.
The resulting reaction may be a change of mode of the application device which could be directly observed by the commission tool or the reaction could for instance be a signal transmission of the application device, such as a sensor, to an application control network which may be detected by a commissioning base station that is in communication with the application network and/or the commissioning tool.

Preferably, the application plan entry comprises the relative coordinates of the application device.

Preferably, triggering an event comprises submitting a request to change a mode of operation of the first application device, and
wherein determining a position of the application device comprises identifying the first application device by observing the changed mode of operation.

Preferably, triggering an event comprises creating a signal to be detected by the first application device, and
wherein creating an application plan entry comprises creating the application plan entry upon detection of a signal transmitted by the first application device to the application control network in reaction to the detected signal.

### BRIEF DESCRIPTION OF THE DRAWINGS

Figure 1 shows a preferred embodiment of the present invention.
Figure 2 shows a preferred embodiment comprising an autonomous commissioning device.
Figure 3 shows a preferred embodiment comprising another autonomous commissioning device.
Figure 4 shows an exemplary application network distributed over several rooms.
Figure 5 illustrates SDN enabled path detection enabled after automated commissioning of a lighting control system.
Figure 6 show a further preferred embodiment of the present invention in which the application devices are provided with external power supply.
Figure7 shows an exemplary building plan showing several application devices to be commissioned in different rooms.
Figure 8 illustrates the path finding of an autonomous commissioning device.
Figure 9 illustrates a flow chart illustrating a preferred embodiment of a method according to the present invention.
Figures 10a-c illustrates a further flow chart illustrating in detail a preferred embodiment of a method according to the present invention.
Figures 11-13 illustrate an arbitrary route of the commissioning device through a plurality of rooms of a building.

### DETAILED DESCRIPTION OF EMBODIMENTS

Embodiments are now described based on a lighting control system. However, it is to be understood that the embodiments are not restricted to lighting control systems. The person skilled in the art will appreciate that the methods and devices may be exploited in any other control system having a similar topology.

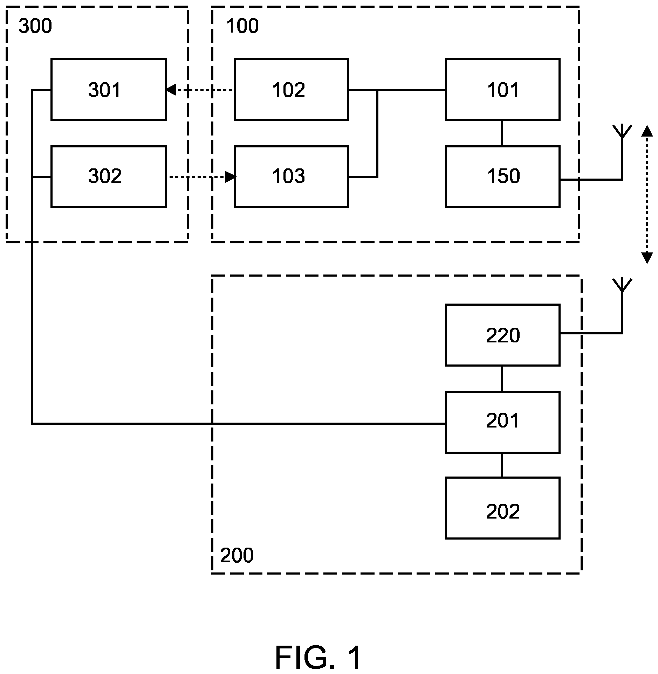

Fig. 1 illustrates a first embodiment of the present invention. A commissioning device 100 maintains a data-link 150/220 to a commissioning base station 200 during the commissioning process. Wherein Fig. 1 illustrates the data link as RF data link, the data link may also be realized as IR, VLC, FSO, acoustic, etc. The commissioning base station 200 implements a SDL system 201 which maintains a building and lighting plan 202. The SDL system 201 is connected to a lighting control network 300 to record data from sensors 301 and to send commands to trigger actuators 302. The commissioning device 100 can interact with the lighting control network 300 as well, to trigger sensors 301 and to observe status changes of actuators 302. Interaction between commissioning device 100 and the commissioning base station 200 on the observed results of a requested action will close the control loop. The commissioning device 100 may trigger a sensor and request from commissioning base station 200 what result has been observed and vice versa.

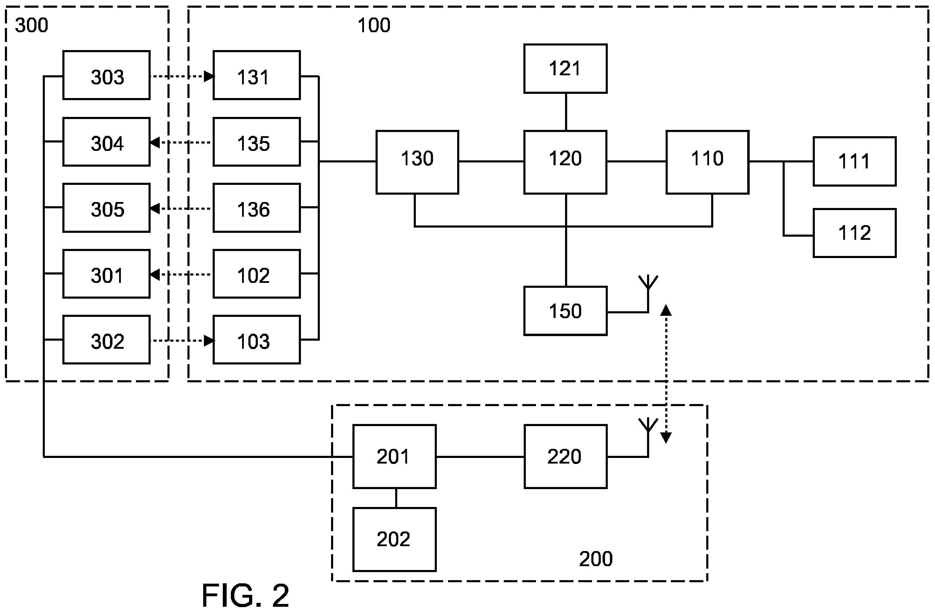

In Fig. 2 a further system diagram with typical building blocks to automatically commission a lighting control system is shown.

The commissioning device 100, the commissioning base station 200 and the lighting control network 300 are further detailed with respect to Fig. 1. The commissioning device 100 may implement a motion control system 110. This motion control system 110 controls an exact and robust movement of commissioning device 100 in any of 3 dimensions by controlling motion actuators 112 and measuring with motion sensors 111 if the commissioning device 100 is achieving the desired motion or holding the desired position. Naturally, in case the commissioning device 100 is not an autonomous vehicle but merely transported by a human being or animal, the motion actuators may be absent or feedback information about the desired motion may be presented, in audible, visible, tactile or other forms. The motion control module 110 may receive input from navigation module 120 in what direction the commissioning device 100 is expected to be moved and how or alternatively at what position it is to be hold. Navigation module 120 knows the exact current position from its position sensors 121 and plots a course based on input from the situational awareness module 130, which has exact information about the events in the area surrounding the commissioning device 100. The situational awareness module 130 may use an imaging module 131 to understand how the room is dimensioned and use that data to construct a relative coordinate system and geo fence of the room and building. The imaging system 131 may also deliver data to determine obstacles, which should be taken into account when plotting a course. The imaging system 131 will also detect status changes in lamp actuator 303 and inform the SDL system 201 via the wireless data-link 150 and 220. Commissioning device 100 may use any type of trigger 102 to activate a corresponding sensor 301 in the lighting control network 300. In addition, the commissioning device 100 may use any type of sensor 103 to detect a status change of a corresponding actuator 302 in the lighting control network 300. More specifically, commissioning device 100 may use InfraRed (IR) blaster actuator 135 to trigger a presence detector (for example but not limited to e.g. Passive Infrared (PIR) sensor) 304 inside a room. And a touch actuator 136 may be used to activate a light switch sensor 305. The situational awareness module 130 will maintain the overview which sensors and actuators in the geo fence of the room have been associated already and which ones have not been completed yet. Persons skilled in the art will understand that a matching combination of sensor and actuator is required for association of a component in the lighting control network. Lamp and sensor may be separate components or alternatively combined inside one enclosure. To associate a lighting control sensor in a room, the commissioning device 100 determines the relative coordinate of said sensor and uses a trigger to activate that sensor. Subsequently, the commissioning device 100 will interrogate via data link 150-220 the SDL system 201, if it has received a message from that exact sensor via the data communication network between the lighting control network 300 and the SDL system 201. If so, the association of trigger and positive notification will result in the SDL system 201 programming said association in a lighting plan 202, by storing for example the relative coordinate of the sensor inside the room, the information that this sensor was identified inside the geo fence (of said room), the network ID received from the network. It shall be understood that other combinations of data may be possible to represent the association of the found lighting control sensor.

To associate a lighting control actuator such as for example a lamp in a room, the commissioning device 100 determines the relative coordinate of said lamp actuator 303. Subsequently, the commissioning device 100 will command via data link 150-220 the SDL system 201 to change status of (a subset of) lamps until the imaging module 131 from commissioning device 100 observes the status change of the particular lamp 303. If the status has changed, the association of lamp and positive notification will result in the SDL system 201 programming said association in a lighting plan 202, by storing for example the relative coordinate of the lamp inside the room, the information that this lamp was identified inside the geo fence (of said room), the network ID received from the network, etc. It shall be understood that other combinations of data may be possible to represent the association of the found lamp (i.e. lighting control actuator). In addition to commissioning the end devices in an application system, such as lights and sensors/actuators in a lighting system, the commissioning device 100 may also be used to commission the data forwarding devices in the communication network building the application networks backbone network. In case the data forwarding devices are installed behind ceiling or wall plates, the commissioning would have to take place during construction. However, in modern buildings cover plates are often not installed such that the commissioning could also take place at any arbitrary time. In order to allow the commissioning device to identify a data forwarding device, the data forwarding device would have to indicate a change in operation. Accordingly, the data forwarding device may be provided with a small status indicator such as an LED or the like which may visually indicate a change in status, e.g. changing light from red to green or blinking, etc. As for the end devices, the commissioning tool can record the location of the data forwarding device allowing a fast allocation of a respective data forwarding device in case any malfunction is detected for the data forwarding device.

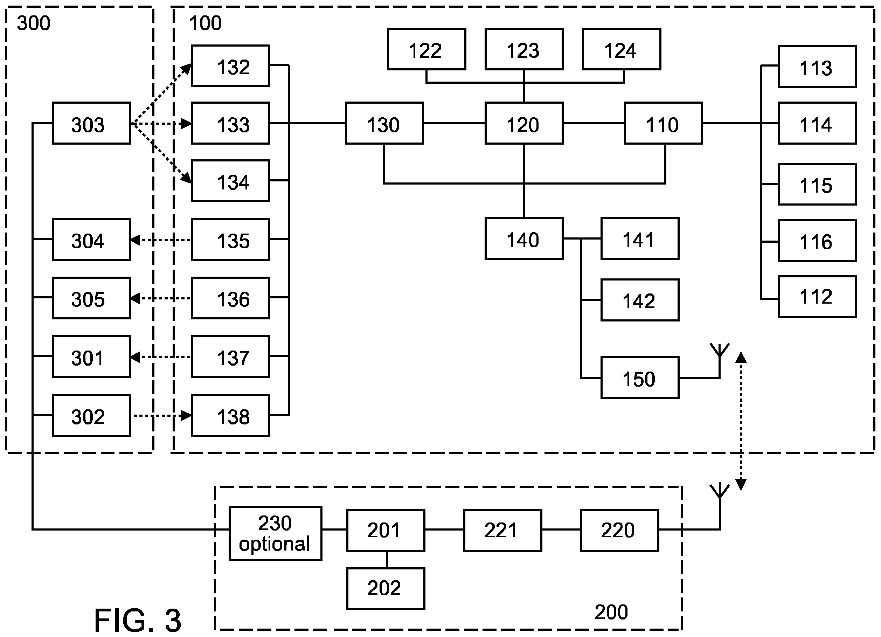

Fig. 3 shows a lighting control system, in which an autonomous vehicle is used as commissioning device. The description of Fig. 3 will concentrate on the delta with respect to Fig. 2, and merely explain the specific components that are unique in this implementation. It shall be appreciated that another system diagram can be constructed to implement a system using an autonomous vehicle, e.g. certain sensors could deliver their input either to the navigation module, the situational awareness module, the motion control module or any combination thereof.

The commissioning device 100 comprises a microprocessor 140 with storage space 141 and a working memory module 141 to run motion control module 110, navigation module 120 and situational awareness module 130.

The motion control system will stabilize the autonomous vehicle while in transit and may use a variety of sensors to detect and alter motion, such as for example but not limited to rpm sensors 113, acceleration sensors 114, rotation sensors 115 and motion actuators 116. A gyroscope is considered another implementation of a rotation sensor and acceleration sensor. A state of energy sensor 116 may determine how much energy is left to sustain the motions and may be input for the motion control module 110 as well as the navigation module 120 to plot the remaining course or return to a base or docking station to recharge. An example of a state of energy sensor 116 is for example a state of charge indicator of a battery or a fuel gauge indicating the fuel that is left in the tank. The navigation module 120 may use a compass sensor 122 to determine bearing and an altimeter sensor 123 to determine height of the autonomous vehicle above the hard surface and may additionally use a ceiling sensor 124 to reliably determine the distance between ceiling and autonomous vehicle. The imaging module 131 is implemented using a laser range finder 132 to detect the dimensions of the room, to determine the corners, as input for the situational awareness module 130 to construct the geo fence of the room. Another component of the imaging system 130 is an imaging sensor (e.g. camera) 133. The imaging sensor 133 may be used to detect if lighting control components are in the room. In one embodiment the imaging sensor 133 may be combined with the laser range finder 132 to construct the required situational awareness to move though the room. Alternatively or additionally, a laser scanner 134 may be used to determine the geometry of the room and/or detect lighting components.

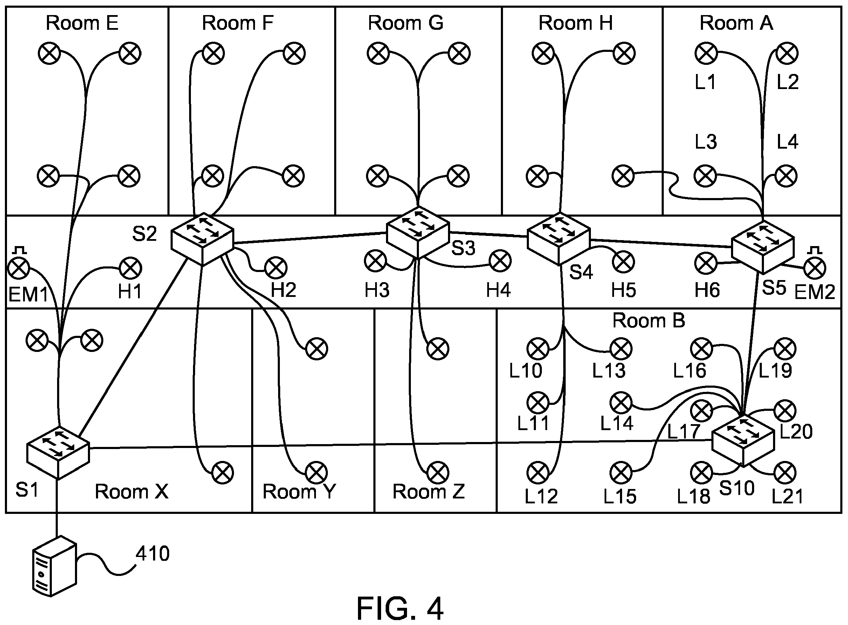

The commissioning base station or the lighting control network may optionally contain a Software Defined networking (i.e. SDN) system 230, that is integrated with the SDL system 201. The SDN system 230 will automatically program the correct filters in the network's data communication equipment to pass on data packets reliably through the network. These filters or so-called data path definitions will be created to isolate the lighting control commands from other data traffic that may be carried over the data communication network. The SDL system will provide the required input to the SDN networking system 230 to reliably program all filters and Quality of Service in the network. The SDL system has all the knowledge about the light plan, stipulating not only what sensor will work with which subset of lamps, but also comprises timing information (e.g. which interaction is desired at what time and for how long). Since this information may be stored in a network graph, the Software Defined Networking can programmatically verify correctness of all required filters and reliably and dynamically limit duration of configuration messages (as these filters may have an expiration time). The commissioning device 100 does not rely on SDN to be present, but when the SDL component 201 is coupled to the SDN system 230, the knowledge about the lighting control plan can add a dimension of time and specification of the action to be executed, e.g. which (subset of) sensor(s) X will trigger which subset of load(s) Y during which time. The SDL system 201 comprises all relevant information to determine the lighting / control plan and translates this "specification" of the action to be executed into input for the SDN system 230 which programs the correct data path definitions and filters in the communication network. The following example illustrates the mechanism of integrating the optional SDN system into an embodiment of the present invention. Fig. 4 shows an example of arbitrary installation of lighting equipment (i.e. lights, PIR, light switches) and network equipment (i.e. data-switches with or without PoE). The lines may represent a wired or wireless communication medium as well as a combination thereof. The network may be unmanaged, e.g. an unmanaged legacy Ethernet network. For managed networks network management system 410 is implemented with an appropriate protocol, e.g. SNMP, MPLS, BGP or SDN protocol. The network management system 410 may already have been separately configured. If the network of Fig. 4 is a SDN enabled network, all required data path definitions and filters to reliably pass data between specific nodes are programmed by the network management system 410. In other words, the network management system configures the network filters stipulating the routes that the data has to travel from A to B. The network management system may be linked to a SDL system 201 which is further coupled or integrated into the commissioning base station 200 that is in communication with the commissioning device 100 in order to directly integrate associations detected by the commissioning device into the management process.

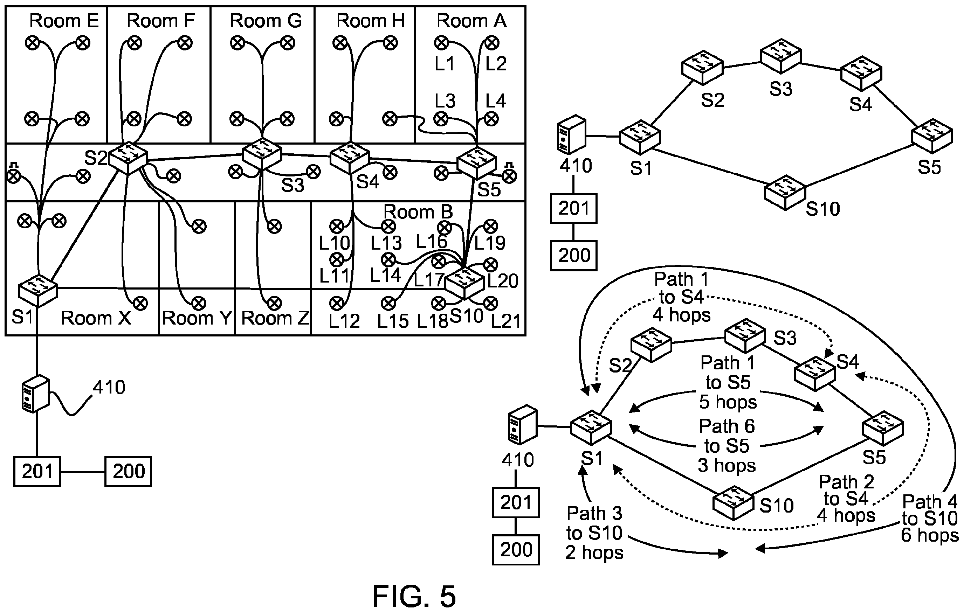

After fully automated commissioning has detected and accordingly programmed all network associations in the background, the system is able to perform actions such as shown in Fig. 5.

An SDN enabled network can dynamically determine which paths definitions are available to optimize traffic of data messages between lighting sensors (such as PIR sensors) and lighting actuators (such as lamps). But populating the RiB (Router Information Base) is only the beginning. An SDN supported lighting control system is a building block to create a fully automated commissioning of a lighting control system. When such automated SDL control system is supporting a standardized link to a facility management system, the lighting control system can be enhanced with sensible and human readable labels for lighting equipment and scenes in the light plan. In addition interesting integrations between different building works can be implemented.

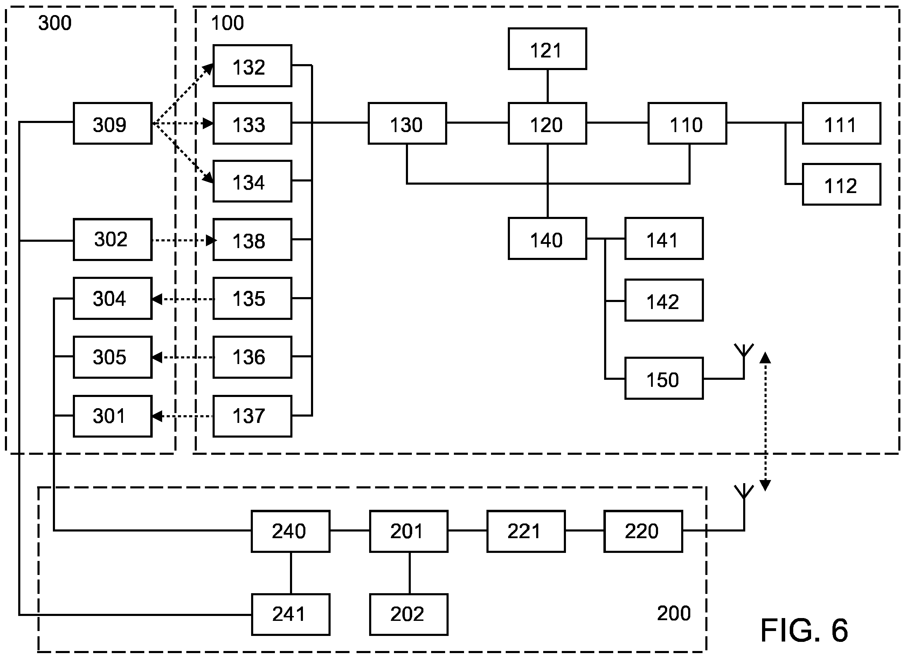

A further embodiment of a system is presented in Fig. 6 where control components may switch a load directly at the voltage of the application without PoE or SDN. In the example below the voltage of the load is 230 VAC, but other voltages are possible. This embodiment uses control components of the EIB / KNX standard, but other control standards (like for example but not limited to XI0, etc.) are possible and not excluded.

Alternative to the embodiment depicted in Fig. 3, the line between the actuator 309 and the load 302 itself is not implemented by the wired or wireless connection of the control network, which may or may not additionally carry power, but by a separate high(er) voltage power line, in this example 230 VAC (i.e. Voltage Alternate Current) but not limited to AC (i.e. Alternate Current) nor 230V. In the example of Fig. 6, the system components that switches the loads is a EIB (European Installation Bus) a.k.a. Instabus or KNX or Konnex component called an ""actor"(i.e. actuator). The EIB/KNX "actor" 241 talks to the EIB/KNX infrastructure 240 via any connection of the possible topologies which may be wired, wireless, power-line, IP, twisted pair, etc. The EIB/KNX infrastructure 240 may implement a combination of line couplers, sensors, actuators, etc. to support the EIB protocols for sensing and switching and a gateway to interact with other topologies. The SDL system 201 is connected to the EIB/KNX infrastructure 240 to pass control data and commands back and forth, which the system uses to communicate requests, observations and associations between the commissioning device 100 and the commissioning base station 200. It shall be understood that hybrid combinations of networks with elements of from Fig. 3 and Fig. 6 are possible, where loads and/or sensors are powered by batteries, by the communication network or by a separate power network or source.

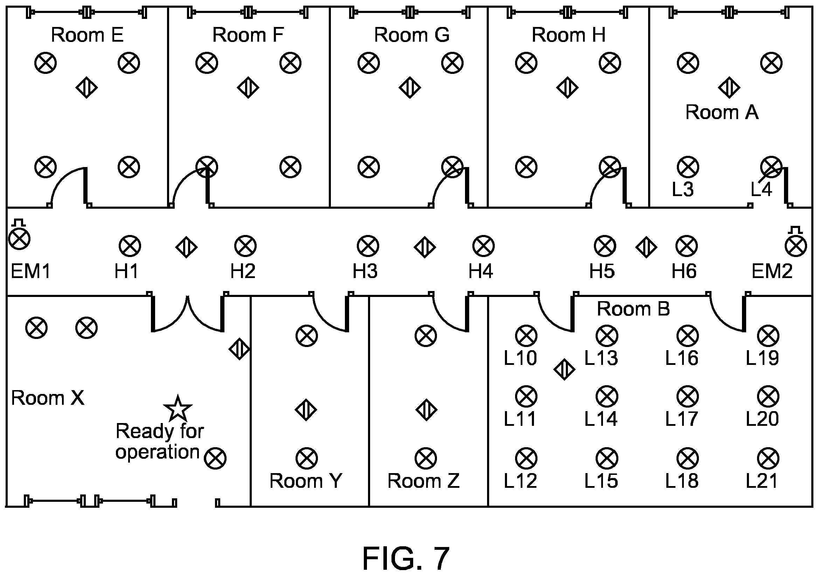

To elaborate the concept of automatic commissioning of lighting and network equipment, closing the loop from installation to operation, the example floor plan of Fig. 7 is used. This floor plan is used to explain how the auto commissioning takes place. For this example, assuming that in each room some lights, a PIR (Passive InfraRed) sensor for presence detection and a light switch are installed.

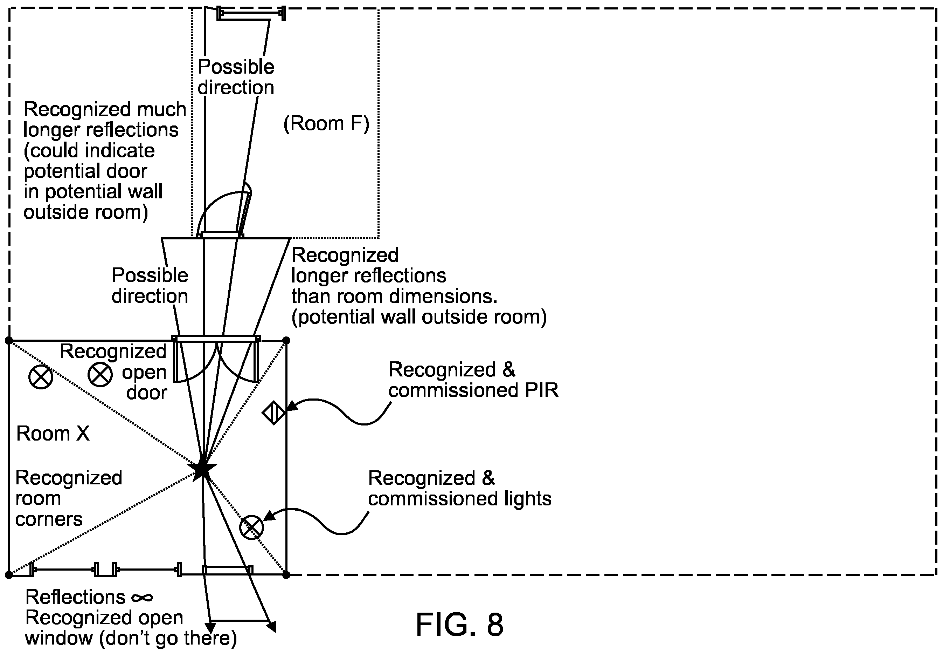

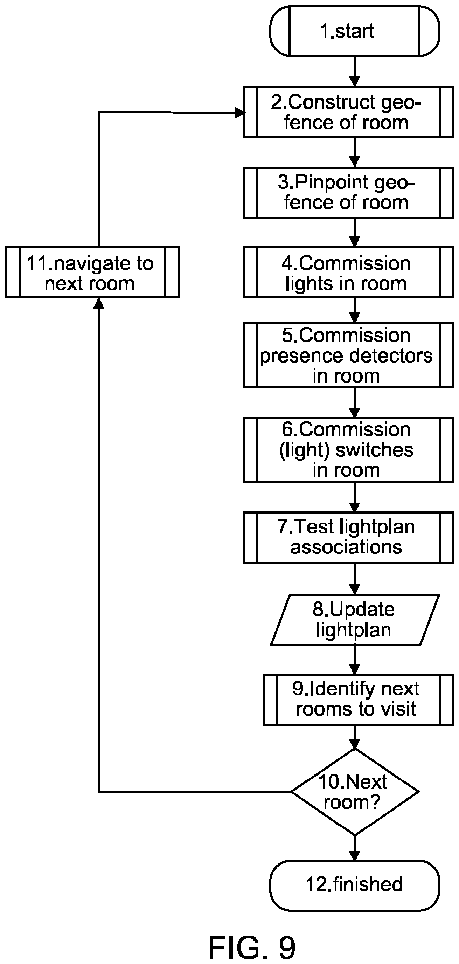

The commissioning device shall detect the lights, the PIR sensor and the light switch inside the geo-fence of the room and commission a lighting scene in the SDL system that automatically associates the PIR sensor and light switch with all the lights in the room. After the commissioning device (e.g. autonomous vehicle) has been put into an arbitrary room (in case of Fig. 7 the commissioning device may have been transported into room X) it is switched on and starts its operation as shown in Fig. 8 below.
The process to explore the lighting equipment (i.e. lamps and sensors) inside a geo-fence (i.e. room) is relatively simple and is outlined in Fig. 9. The commissioning device 100 will work through a room to find and associate components, sensors and actuators of the control system, associate them to the control system as lighting plan entries and lighting scenes, and program control rules that may be based on templates. When the commissioning device and/or the commissioning base station has determined possible exits from the room, these potential other rooms may be explored as well, until the system has visited all rooms in the building and commissioned all components. Since the detection of an exit may require some computational effort, the task may be offload to the commissioning base station. It shall be understood that the method of using a commissioning device to associate sensors and actuators could be used in control systems that are performing other functions than lighting either in combination with lighting control or complete separate.
The dynamic behavior of the system is illustrated in the flow chart diagram of Fig. 9.
As a first step the commissioning device is switched on and the data link 150 connects to the SDL system 201 of present invention. In step 2 the imaging module 131 of commissioning device 100 will scan the room and construct a geo-fence with relative coordinates. The commissioning device may use e.g. photographic imaging of the ceiling to construct a relative coordinate system. Alternatively, it may use a simple, rotating laser range finder, a laser scanner or other means. Step 3 is dedicated to pinpointing a geo-fence. The lighting control sensors (such as e.g. PIR type presence detectors, light switches, etc.) will be triggered and will cause a network message to the system. The triggers will be combined with the geo-fence of the room where the commissioning device is currently located, so as to pin point the "vicinity" in the data communication network where the message(s) came from, by analysing a network graph representation of the network. This helps to locate the working position inside network graphs and is used to scale well in big lighting installations. This limits the number of lamps whose status need to be altered by the system in the next step, step 4. Although the system may work equally well in a communication network by altering status of each lamp until the roving commissioning device finds the association, such an approach does not scale well with large building complexes. In a preferred embodiment it is therefore attempted to locate the "vicinity" of the originating trigger which limits the number of status changes until a matching association, e.g. lamp is found. Should the approach do not result in a match in the identified vicinity, the system will use a fall-back procedure, possibly trying exhaustively until the matching association, e.g. lamp is found.
In step 4 the lights in a room are commissioned. The commissioning device 100 requests the commissioning base station 200 to switch "all" lamps on. The SDL system 201 will switch on all lamps that need commissioning. This may be based on pinpointing from network graphs of step 3, all lamps that are installed in the building or a subset thereof. Although prior information is not required by a corresponding algorithm, it shall be understood that the system may use pre-configured information about for example the number of lamps that have been physically installed in the room(s) in order to further enhance quality of commissioning. The system shall notify if all requested lamps are on.
The situational awareness module 130 of commissioning device 100 processes information from its imaging module 131 to select if all lamps in the room are on. When the commissioning device 100 observes that, despite the request to switch on all lights in a room, some lamps are not turned on, the commissioning base station 200 and the commissioning device 100 may retry communication a certain amount of times until all lamps are indeed switched on. Should after a predetermined amount of retries at least one light still not switch on, this may be recorded in a list and/or be alerted to a system admin.
The situational awareness module 130 of commissioning device 100 processes information from its imaging module 131 to select the lamp(s) that are not commissioned. The system is able to reconstruct if the relative coordinate of the selected lamp(s) or other lighting control components have already been commissioned and thus are already associated.
Next to lamps the system shall be able to identify other sensors. The situational awareness module of the commissioning device 100 shall generate bearings and/or directions as input for the navigation module 120 of commissioning device 100.
The commissioning device 100 attempts to associate the lamps:
1. The commissioning device 100 moves to location of a/the lamp as identified from previous step. Alternatively, instead of using still images or moving, real-time video feed during transit, the commissioning device may also select a lamp from a still image or video feed, while it is situated on a stationary location (i.e. sitting on bottom). This may be done once or dynamically updated multiple times.
2. The commissioning device records the relative 2D (X and Y) or 3D (X and Y and Z) coordinates.
3. The commissioning device 100 requests the SDL system 201 to change status of the lamp. After execution of the required commands, the SDL system 201 will notify commissioning device 100 of said status change. A changing status of the lamp may be represented by a distinct change of brightness level, colour or interval thereof, in any combination, as to represent a very recognizable pattern.
4. If the status change of the selected lamp is observed by the commissioning device 100, the system will record the association. One example of an association may be the relative coordinate of the lamp inside the room, the information that this lamp was identified inside the geo fence (of said room), the network ID received from the network. It shall be understood that other combinations of data may be possible to represent the association of the detected lamp. These steps are repeated until all lamps in the room are commissioned. If the system contains an optional list with numbers of physically installed lighting control system components, which may have been entered prior to the commissioning run, the list may be checked to confirm that all components have been found and commissioned. A confirmation or error may be recorded by the commissioning device 100, the commissioning base station 200 or both as separate lists. Naturally, these lists do not have to match, but can be compared by the SDL system 201 to generate a list of components in the lighting control system that (likely) have not been commissioned, as input for a follow up action.
In step 5 the presence detectors are commissioned. The commissioning device 100 may move to the (direction of) a sensor for enhanced probability of triggering success and record the relative coordinates inside the geo-fence representing the current room.
The commissioning device 100 uses its IR blaster actuator 135 to send an IR signal with a special pattern to trigger the presence detector in the room. Usage of a special pattern may provides an indication to the system that it has been triggered by the commissioning device and not inadvertently by another signal. The special pattern may represent an unusual signal. This maybe a repeating IR flash, with distinct intensity and/or intervals, e.g. 10 blasts of half a second interval or a code akin to for example Morse code or variations of intensity, if the presence detector would be able to determine these as special patterns (depending on granularity, resolution, etc.). Preferably the pattern should differ significantly from a natural pattern that a human being or animal would produce inside a room. The presence detector would be able to enter a commissioning mode where it can filter for the distinct "commissioning" specific IR blaster pattern. Alternatively, the system could operate in a mode where the presence detector may react to human or animal signals, but the system will ignore these messages from the presence detector until it has been commissioned. This means that the SDL system can filter for the special "commissioning" IR blaster pattern, or alternatively the presence detector can enter a filtering mode and restrain from passing any other messages than those resulting from the special "commissioning " IR blaster pattern.
The SDL system 201 detects that a presence detector was triggered (i.e. the e.g. PIR sensor in the room where the commissioning device is currently present) and sends a notification message to commissioning device 100.
The commissioning device 100 requests SDL system 201 to record an association (that presence detector fits inside the same geo-fence as previously identified lamps). An exemplary association could be the relative coordinate of the sensor inside the room, the information that this sensor was identified inside the geo fence (of said room), the network ID received from the network. It shall be understood that other combinations of data may be possible to represent the association of the found lighting control sensor.
The commissioning device requests to switch off all lamps in geo-fence and gives a "human" IR blast to the presence detector sensor, to simulate that a human person enters or moves through the room. The SDL system 201 notifies that it has seen the associated presence detector that has been triggered and additionally notifies that all lamps that were found inside the geo-fence of the room have been switched on. All lamps inside the geo-fence should go on, which is to be verified by commissioning device 100. If all lamps are switched on, the commissioning device commands the SDL system to record a lighting scene in the lighting plan, so as to "bind" the presence detector sensor in said room to the associated lamps in that room. These steps are repeated until all presence detectors in the room are commissioned. If the system contains an optional list with numbers of physically installed lighting control system components, which may have been entered prior to the commissioning run, the list may be checked to confirm that all components have been found and commissioned. A confirmation or error may be recorded by the commissioning device 100, the commissioning base station 200 or both as separate lists. Naturally, these lists do not have to match, but can be compared by the SDL system 201 to generate a list of components in the lighting control system that (likely) have not been commissioned, as input for a follow up action.
In a further step the commissioning of the switches such as (light) switch sensor 305 is performed. The commissioning device 100 may move to (the direction of) a light switch sensor for enhanced probability of successful triggering and record the relative coordinates inside the geo-fence representing the current room. The commissioning device 100 uses its touch actuator 136 to generate a pressure on the switch with a special pattern to trigger the (light) switch in the room. Again the special pattern may be used to indicate to the system that it has been triggered by the commissioning device and not inadvertently by another signal. The special pattern may represent an unusual signal, e.g. a repeating press on the switch, with distinct intensity and/or intervals. For example, the pattern may represent a repeated signal with identical intervals (e.g. 6 presses of one second interval) or alternative intervals (e.g. a code akin to for example Morse code) or variations of intensity, if the (light) switch 305 would be able to determine these. It should preferably differ from a natural pattern that a human being or animal would produce inside a room. The (light) switch would be able to enter a commissioning mode where it can filter for the distinct "commissioning" specific touch pattern. Alternatively, the system could operate in a mode where the (light) switch may react to human or animal signals, but the system will ignore these messages from the (light) switch until it has been commissioned. This means that the SDL system can filter for the special "commissioning" touch pattern, or alternatively the (light) switch can enter a filtering mode and restrain from passing any other messages than those resulting from the special "commissioning " touch pattern. The SDL system 201 detects that a (light) switch was triggered (i.e. the (light) switch in the room where the commissioning device is currently present) and sends a notification message to commissioning device 100. Commissioning device 100 requests SDL system 201 to record an association (that the (light) switch fits inside the same geo-fence as previously identified lamps). An association may be the relative coordinate of the light switch inside the room, the information that this light switch was identified inside the geo fence (of said room), the network ID received from the network. It shall be understood that other combinations of data may be possible to represent the association of the detected light switch. The commissioning device requests to switch off all lamps in geo-fence and gives a "human" touch pattern to touch actuator, to simulate that a human person operated the (light) switch in the room. The SDL system 201 notifies that it has seen the associated (light) switch that has been triggered and additionally notifies that all lamps that were found inside the geo-fence of the room have been switched on. All lamps inside geo-fence should go on, which is to be verified by the commissioning device 100. If the commissioning device verified that all lights have been switched on, the commissioning device commands the SDL system to record a lighting scene in the lighting plan, so as to "bind" the (light) switch(es) in said room to the lamps in that room. These steps are repeated until all switches in the room are commissioned. If the system contains an optional list with numbers of physically installed lighting control system components, which may have been entered prior to the commissioning run, the list may be checked to confirm that all components have been found and commissioned. A confirmation or error may be recorded by the commissioning device 100, the commissioning base station 200 or both as separate lists. Naturally, these lists do not have to match, but can be compared by the SDL system 201 to generate a list of components in the lighting control system that (likely) have not been commissioned, as input for a follow up action.

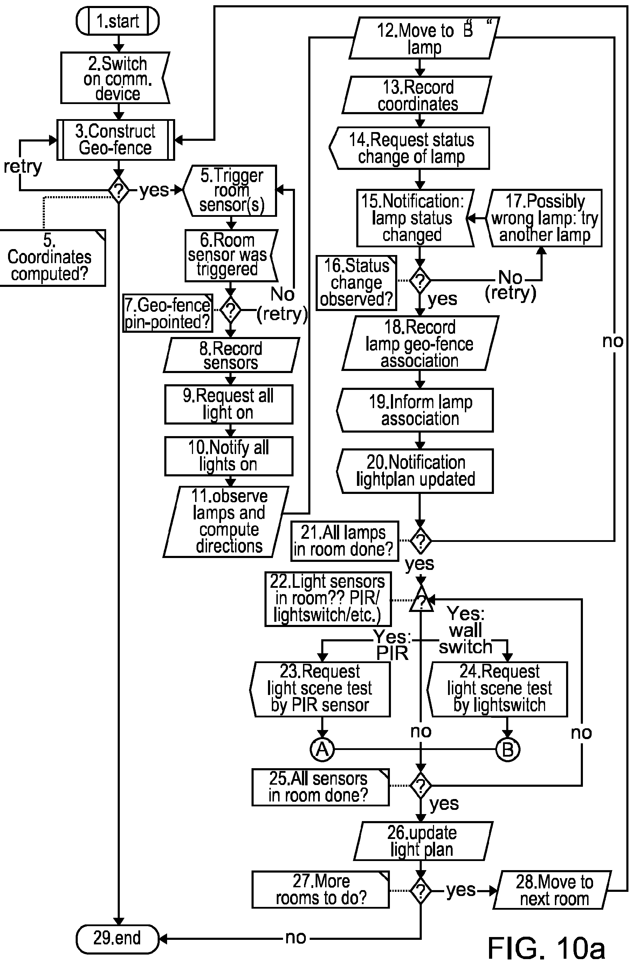

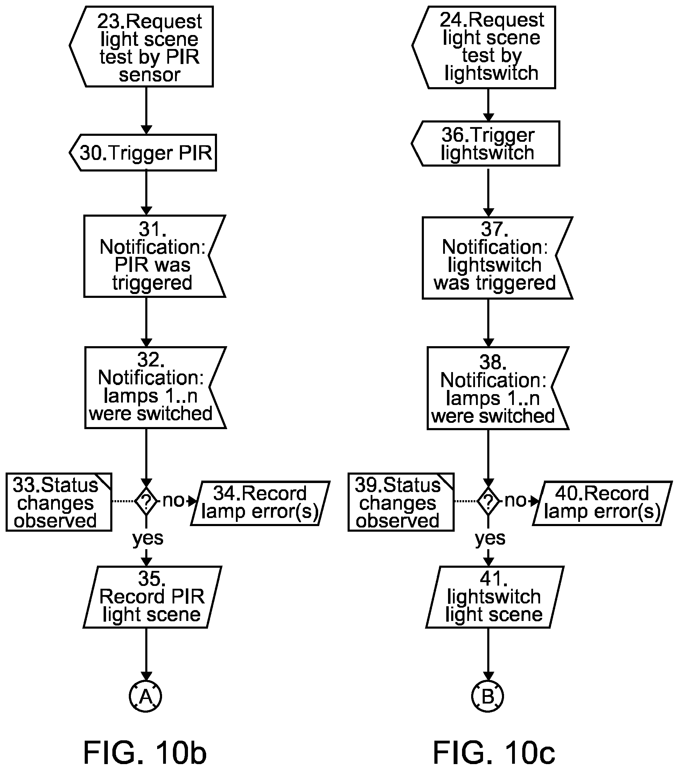

Fig. 10 a -c illustrate the above detailed example of the auto commissioning procedure described herein above.
It shall be appreciated that other sequences or combinations of steps in the dynamic flow diagrams of Fig. 9 and Fig. 10a-c are possible and not excluded. As an example, the commissioning device may start associating the PIR sensors, or the light switches, or other (lighting) control sensors, or other components first and continue in any sequence until all components are associated. In the end the components are associated based on the concept of the geo-fence and templates to automatically program a control rule (i.e. light scene or recipe) that for example a trigger from component (or set of components) type "A" shall control another component (or set of components) type "B". Of course, multiple trigger types from one or multiple components A may give input to the decision to control another component (or set of components) type "B". Equally, any trigger or multiple triggers thereof, which can be combined in a decision to control other components, may result in controlling components representing different types of actuators, as joined in the (lighting) control recipe.

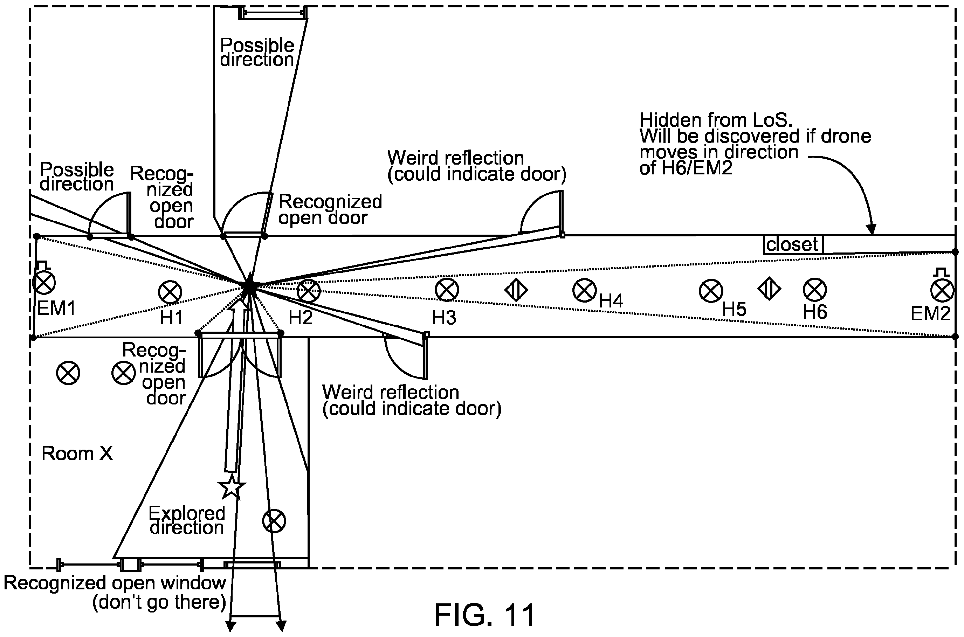

When the commissioning device is finished within a room commissioning all components, it informs the SDL system. The SDL system programs lighting scenes in the light plan to associate the PIR sensor, the light switch and the lamps inside the geo fence. The SDL system will continue to learn when the light scenes are triggered during normal operation and may periodically refine the data forwarding, the path selection and the on/off/idle switching of network communication and lighting components to save energy and improve operation of the network as described in copending application 2015PF00831 (2015ID00207, 2014ID02750 and 2014ID02752) . The commissioning device may continue commissioning in the next room. An example of an arbitrary route is shown in Figs. 11 to 13.

As shown in the example Fig. 11, the commissioning device started commissioning in room X. Upon detecting the door to the hall (assisted by the imaging and situational awareness module, for instance by detecting reflections which may indicate a glass door), the commissioning device continues to move to the hall and from there to room F, where it starts working through the above described commissioning cycle as described herein above to identify all lamps and sensors, have them triggered and tested and if working correctly have them added to the light plan.

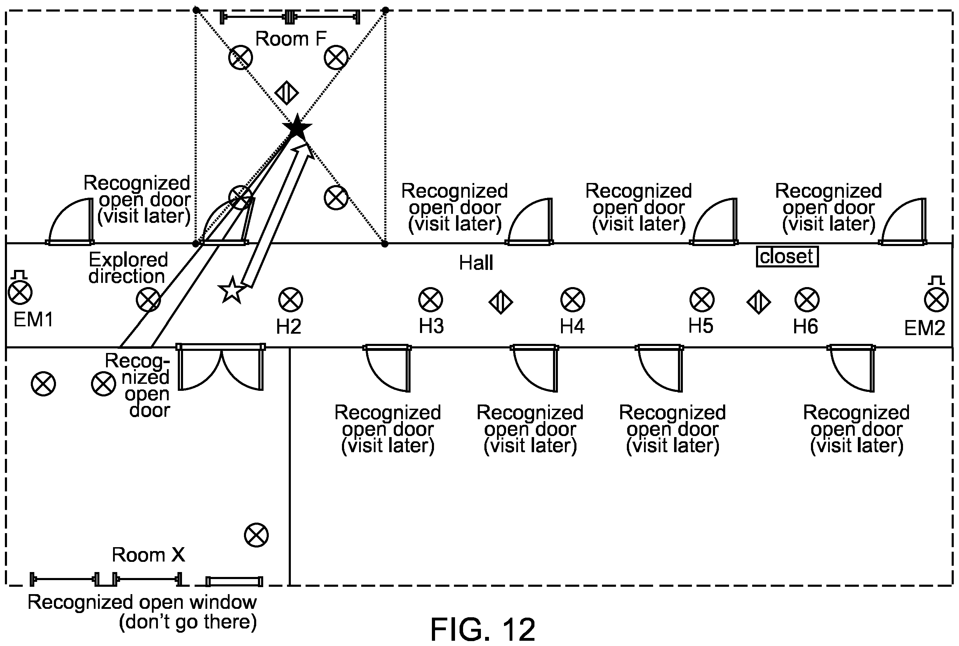

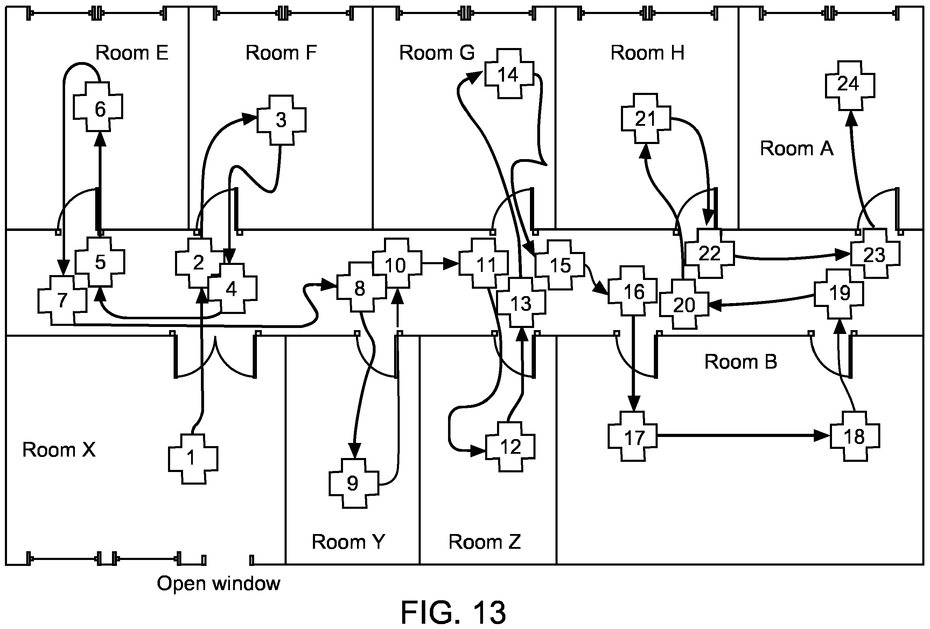

As is shown in Fig. 12, the commissioning device continues to visit unexplored rooms. The commissioning device progressively builds or updates the light plan and continues to visit unexplored rooms until the system notifies there is no more uncommissioned lighting equipment. An example of such a progressive exploration path is shown in Fig. 13. The system supports an arbitrary exploration path through the building. A smart routing algorithm may be required.
The system maintains a list of lighting control components that could not be commissioned, which typically represents a low single digit percentage of the entire lighting control components in the lighting control system.
During commissioning the commissioning device needs to maintain a data link with the SDL system. Since the commissioning may take place prior to installation of all office equipment such as Wi-Fi WLAN routers, it may be advisable to use a data link that has a separate and licensed part of the RF spectrum, to enhance penetration of the RF through the building's structures, beams and walls. Examples are DECT or digital pager channels. The use of directional antennas can greatly enhance the distance between the commissioning device and the network's wireless access point. Present art equipment exists to create a data link between a model airplane and a directional antenna. The model airplane detects a GPS signal and transmits its 3D GPS coordinate to the antenna during flight. The antenna can rotate on a gimballed platform and directs itself in 3D towards the position of the model airplane based on the coordinates of the model airplane. This works fine but requires GPS coordinates which cannot be received inside a building.

Therefore, the relative coordinate system of the commissioning device 110 can be used instead to compute a bearing for the directional antenna of the wireless datalink 220 that is connected to the SDL system 201. The directional antenna of wireless datalink 220 will blindly transmit through walls and/or ceilings to the commissioning device 100 to maintain the data link. When the data link is lost the commissioning device 100 will revisit a location where it still had a functioning data link. A mobile RF relay commissioning device may extend the range, and the system will direct the RF relay commissioning device where to position itself based on the relative coordinates of the participants and the reception quality. Backup positions can also be transmitted. It shall be understood that commissioning base station 200 can be stationary but it can be mobile as well.

Procedures like determining a bounded area, triggering an event, creating an application plan entry, et cetera performed by one or several units or devices can be performed by any other number of units or devices. These procedures and/or the control of the commissioning device in accordance with the method for commissioning an application device can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A system comprising
- a commissioning base station (200) adapted to access a lighting plan (202), wherein the lighting plan (202) may be empty or comprise one or more lighting plan entries and scenes;
- a commissioning device (100) communicatively connected with the commissioning base station (200), and adapted to determine a position within a bounded area detected by the commissioning device (100) of a sensor device (301) that is coupled with the commissioning base station (200) via a lighting control network (300),
**characterized in that**
- the commissioning device (100) is adapted to interact with the commissioning base station to trigger a reaction of the sensor device (301) by sending a signal to the sensor device (301) or interacting with a lighting control network (300) to trigger the reaction; and
- the commissioning base station is adapted to create a corresponding lighting plan entry for the sensor device (301) upon verification of the reaction from the sensor device (301), to locate the sensor device (301) in a network graph representing the network topology upon occurrence of the reaction of the sensor device (301), to determine a lighting device (302) in the vicinity of the sensor device (301) in the network graph; and to trigger the lighting device (302);
wherein the commissioning device (100) is adapted to determine a position of the lighting device (302) within a bounded area upon detecting a reaction of the triggered lighting device (302), and wherein
the system is further adapted to create a lighting plan entry for the lighting device (302) and a lighting scene entry associating the sensor device (301) with the lighting device (302).

2. The system according to claim 1, wherein the commissioning device (100) is an autonomous vehicle, in particular a ground based vehicle, a marine vessel or an aerial vehicle.

3. The system according to claim 1, wherein creating a lighting plan entry or lighting scene comprises updating an existing lighting plan entry or lighting scene.

4. The system according to one of claims 1 to 3, wherein the commissioning device (100) comprises:
- an imaging module (131) and
- a situational awareness module (130);
- a communication interface enabling communication with the commissioning base station (200);
wherein the situational awareness module (130) is adapted to:
- process data provided by the imaging module (131) to construct a relative coordinate system and geo-fence of a bounded area,
- detect the sensor device (301) communicatively coupled with the commissioning base station (200) within the bounded area, and
- determine the position of the sensor device (301) within the bounded area; and wherein the commissioning device (100) is adapted to:
- trigger a reaction of the sensor device (301) receivable by the commissioning base station via a lighting control network (300),
- assist in creating a corresponding lighting plan entry for the lighting devices upon verification of the reaction by the commissioning base station (200),
- detect a reaction of the lighting device (302) triggered by the commissioning base station that is communicatively coupled with the lighting device (302), and
- assist in creating a lighting plan entry for the lighting device and a lighting scene entry associating the sensor device (301) with the lighting device (302).

5. The system according to claim 4, wherein the imaging module comprises an imaging sensor (133), a laser range finder (132), a laser scanner or combinations thereof.

6. The system according to claim 4, wherein the commissioning device (100) further comprises a motion control system (110, 111, 112) connected to the situational awareness module (130) and/or receiving input from a navigational module (120) wherein the control system is adapted to control autonomous movements of the commissioning device (100).

7. The system according to claim 6, wherein the commissioning device (100) further comprises a microprocessor (140), a memory module (141) and a storage module (142), wherein the microprocessor (140) is adapted to run the motion control system (110, 111, 112), the situational awareness module (130), the navigational module (120) or combinations thereof.

8. The system according to claim 4, wherein the commissioning device (100) further comprises a directional antenna for communication with the commissioning base station (200).

9. The system according to claim 4, wherein the sensor device (301) is a network forwarding device.

10. A method for commissioning a lighting device (301, 302) within a lighting control network (300) comprising at least a sensor device (301) coupled with a commissioning base station (200) via the lighting control network (300); wherein the method **characterized in that** it comprises the following steps:
a) a commissioning device (100)
- determining a bounded area and creating a relative coordinate system and geo-fence of the bounded area;
- triggering an event resulting in a reaction of the sensor device by sending a signal to the sensor device (301) or interacting with the lighting control network (300) to trigger the reaction;
- determining a position of the sensor device (301) within the relative coordinate system,
b) the commissioning base station (200):
- creating a lighting plan entry for the sensor device (301) to be stored in a lighting plan (202) upon verification of the reaction from the sensor device (301), and
- locating the sensor device (301) in a network graph representative of the network topology, and
- determining a lighting device (302) in the vicinity of the sensor device (301) in the network graph; and
- triggering a reaction of the lighting device (302); and
c) the commissioning device (100) further
- determining a position of the lighting device (302) within the relative coordinate system, and
d) a system comprising the commissioning base station (200) and the commissioning device (100)
- creating a lighting plan entry for the lighting device (302) to be stored in the lighting plan (202) and a lighting scene entry associating the sensor device (301) with the lighting device (302).

11. The method according to claim 10, wherein the lighting plan entry comprises the relative coordinates of the sensor device (301) and the lighting device (302).

12. The method according to claim 10, wherein triggering the event comprises submitting a request to change a mode of operation of the sensor device (301), and
wherein determining a position of the sensor device (301) comprises identifying the sensor device (301) by observing the changed mode of operation of the sensor device (301).

13. The method according to claim 10, wherein triggering the event comprises interacting with the lighting control network (300) for creating a signal to be detected by the sensor device (301), and
wherein creating a lighting plan entry comprises creating the lighting plan entry upon detection of a signal transmitted by the sensor device (301) to the lighting control network (300) in reaction to the detected signal.

## Patentansprüche

1. System, umfassend
- eine Inbetriebnahmebasisstation (200), die eingerichtet ist, um auf einen Beleuchtungsplan (202) zuzugreifen, wobei der Beleuchtungsplan (202) leer sein kann oder einen oder mehrere Beleuchtungsplaneinträge und Szenen umfassen kann;
- eine Inbetriebnahmevorrichtung (100), die mit der Inbetriebnahmebasisstation (200) kommunikativ verbunden ist und dazu eingerichtet ist, um eine Position innerhalb eines von der Inbetriebnahmevorrichtung (100) erfassten begrenzten Bereichs einer Sensorvorrichtung (301) zu bestimmen, die mit der Inbetriebnahmebasisstation (200) über ein Beleuchtungssteuernetz (300) gekoppelt ist, **dadurch gekennzeichnet, dass**
- die Inbetriebnahmevorrichtung (100) dazu eingerichtet ist, mit der Inbetriebnahmebasisstation zusammenzuwirken, um eine Reaktion der Sensorvorrichtung (301) auszulösen, indem ein Signal an die Sensorvorrichtung (301) gesendet wird, oder mit einem Beleuchtungssteuernetz (300) zusammenzuwirken, um die Reaktion auszulösen; und
- die Inbetriebnahmebasisstation dazu eingerichtet ist, nach Überprüfung der Reaktion der Sensorvorrichtung (301) einen entsprechenden Beleuchtungsplaneintrag für die Sensorvorrichtung (301) zu erstellen, um die Sensorvorrichtung (301) in einem die Netzwerktopologie darstellenden Netzwerkgraphen beim Auftreten der Reaktion der Sensorvorrichtung (301) zu lokalisieren, eine Beleuchtungsvorrichtung (302) in der Nähe der Sensorvorrichtung (301) in dem Netzwerkgraphen zu bestimmen; und um die Beleuchtungsvorrichtung (302) auszulösen;
wobei die Inbetriebnahmevorrichtung (100) eingerichtet ist, um eine Position der Beleuchtungsvorrichtung (302) innerhalb eines begrenzten Bereichs beim Erfassen einer Reaktion der ausgelösten Beleuchtungsvorrichtung (302) zu bestimmen, und wobei
das System ferner eingerichtet ist, um einen Beleuchtungsplaneintrag für die Beleuchtungsvorrichtung (302) und einen Beleuchtungsszeneneintrag zu erstellen, der die Sensorvorrichtung (301) der Beleuchtungsvorrichtung (302) zuordnet.

2. System nach Anspruch 1, wobei die Inbetriebnahmevorrichtung (100) ein autonomes Fahrzeug ist, insbesondere ein bodengestütztes Fahrzeug, ein Seefahrzeug oder ein Luftfahrzeug.

3. System nach Anspruch 1, wobei das Erstellen eines Beleuchtungsplaneintrags oder einer Beleuchtungsszene das Aktualisieren eines vorhandenen Beleuchtungsplaneintrags oder einer Beleuchtungsszene umfasst.

4. System nach einem der Ansprüche 1 bis 3, wobei die Inbetriebnahmevorrichtung (100) Folgendes umfasst:
- ein Bildgebungsmodul (131) und
- ein Situationserkennungsmodul (130);
- eine Kommunikationsschnittstelle, die eine Kommunikation mit der Inbetriebnahmebasisstation (200) ermöglicht;
wobei das Situationserkennungsmodul (130) eingerichtet, um:
- Prozessdaten, die vom Bildgebungsmodul (131) bereitgestellt werden, um ein relatives Koordinatensystem und einen Geozaun eines begrenzten Bereichs zu konstruieren,
- die mit der Inbetriebnahmebasisstation (200) kommunikativ gekoppelte Sensorvorrichtung (301) innerhalb des begrenzten Bereichs zu erfassen und
- die Position der Sensorvorrichtung (301) innerhalb des begrenzten Bereichs zu bestimmen; und wobei die Inbetriebnahmevorrichtung (100) eingerichtet ist, um:
- eine Reaktion der Sensorvorrichtung (301) auszulösen, die von der Inbetriebnahmebasisstation über ein Beleuchtungssteuernetz (300) empfangen werden kann,
- beim Erstellen eines entsprechenden Beleuchtungsplaneintrags für die Beleuchtungsvorrichtungen nach Überprüfung der Reaktion durch die Inbetriebnahmebasisstation (200) zu unterstützen,
- eine Reaktion der Beleuchtungsvorrichtung (302) zu erkennen, die von der mit der Beleuchtungsvorrichtung (302) kommunikativ gekoppelten Inbetriebnahmebasisstation (200) ausgelöst wird, und
- beim Erstellen eines Beleuchtungsplaneintrags für die Beleuchtungsvorrichtung und eines Beleuchtungsszeneneintrags zu unterstützen, der die Sensorvorrichtung (301) der Beleuchtungsvorrichtung (302) zuordnet.

5. System nach Anspruch 4, wobei das Bildgebungsmodul einen Bildgebungssensor (133), einen Laserentfernungsmesser (132), einen Laserscanner oder Kombinationen davon umfasst.

6. System nach Anspruch 4, wobei die Inbetriebnahmevorrichtung (100) ferner ein Bewegungssteuerungssystem (110, 111, 112) umfasst, das mit dem Situationserkennungsmodul (130) verbunden ist und/oder Eingaben von einem Navigationsmodul (120) empfängt, wobei das Steuersystem eingerichtet ist, um autonome Bewegungen der Inbetriebnahmevorrichtung (100) zu steuern.

7. System nach Anspruch 6, wobei die Inbetriebnahmevorrichtung (100) ferner einen Mikroprozessor (140), ein Speichermodul (141) und ein Aufbewahrungsmodul (142) umfasst, wobei der Mikroprozessor (140) eingerichtet ist, um das Bewegungssteuerungssystem (110, 111, 112), das Situationserkennungsmodul (130), das Navigationsmodul (120) oder Kombinationen davon zu betreiben.

8. System nach Anspruch 4, wobei die Inbetriebnahmevorrichtung (100) ferner eine Richtantenne zur Kommunikation mit der Inbetriebnahmebasisstation (200) umfasst.

9. System nach Anspruch 4, wobei die Sensorvorrichtung (301) eine Netzwerkweiterleitungsvorrichtung ist.

10. Verfahren zur Inbetriebnahme einer Beleuchtungsvorrichtung (301, 302) in einem Beleuchtungssteuernetz (300), umfassend wenigstens eine Sensorvorrichtung (301), die mit einer Inbetriebnahmebasisstation (200) über das Beleuchtungssteuernetz (300) gekoppelt ist; wobei das Verfahren **dadurch gekennzeichnet ist, dass** es die folgenden Schritte umfasst:
a) eine Inbetriebnahmevorrichtung (100), die
- einen begrenzten Bereich bestimmt und ein relatives Koordinatensystem und einen Geozaun des begrenzten Bereichs erstellt;
- ein Ereignis auslöst, das zu einer Reaktion der Sensorvorrichtung führt, indem ein Signal an die Sensorvorrichtung (301) gesendet wird oder mit dem Beleuchtungssteuernetz (300) zusammenwirkt, um die Reaktion auszulösen;
- eine Position der Sensorvorrichtung (301) innerhalb des relativen Koordinatensystems bestimmt,
b) die Inbetriebnahmebasisstation (200), die:
- einen Beleuchtungsplaneintrag für die in einem Beleuchtungsplan (202) zu speichernde Sensorvorrichtung (301) nach Überprüfung der Reaktion der Sensorvorrichtung (301) erstellt und
- die Sensorvorrichtung (301) in einem Netzwerkgraphen lokalisiert, der für die Netzwerktopologie repräsentativ ist, und
- eine Beleuchtungsvorrichtung (302) in der Nähe der Sensorvorrichtung (301) in dem Netzwerkgraphen bestimmt; und
- eine Reaktion der Beleuchtungsvorrichtung (302) auslöst; und
c) die Inbetriebnahmevorrichtung (100), die ferner
- eine Position der Beleuchtungsvorrichtung (302) innerhalb des relativen Koordinatensystems bestimmt und
d) ein System mit der Inbetriebnahmebasisstation (200) und der Inbetriebnahmevorrichtung (100), das
- einen Beleuchtungsplaneintrag für die in dem Beleuchtungsplan (202) zu speichernde Beleuchtungsvorrichtung (302) und einen Beleuchtungsszeneneintrag, der die Sensorvorrichtung (301) der Beleuchtungsvorrichtung (302) zuordnet, erstellt.

11. Verfahren nach Anspruch 10, wobei der Beleuchtungsplaneintrag die relativen Koordinaten der Sensorvorrichtung (301) und der Beleuchtungsvorrichtung (302) umfasst.

12. Verfahren nach Anspruch 10, wobei das Auslösen des Ereignisses das Übermitteln einer Anforderung zum Ändern eines Betriebsmodus der Sensorvorrichtung (301) umfasst, und
wobei das Bestimmen einer Position der Sensorvorrichtung (301) das Identifizieren der Sensorvorrichtung (301) durch Beobachten des geänderten Betriebsmodus der Sensorvorrichtung (301) umfasst.

13. Verfahren nach Anspruch 10, wobei das Auslösen des Ereignisses das Zusammenwirken mit dem Beleuchtungssteuerungsnetzwerk (300) zum Erstellen eines von der Sensorvorrichtung (301) zu erfassenden Signals umfasst, und
wobei das Erstellen eines Beleuchtungsplaneintrags das Erstellen des Beleuchtungsplaneintrags beim Erfassen eines Signals umfasst, das von der Sensorvorrichtung (301) an das Beleuchtungssteuerungsnetzwerk (300) als Reaktion auf das erfasste Signal übermittelt wird.

## Revendications

1. Système comprenant :
- une station de base de mise en service (200) conçue pour avoir accès à un plan d'éclairage (202), dans lequel le plan d'éclairage (202) peut être vide ou comprendre une ou plusieurs entrées de plan d'éclairage et scènes d'éclairage ;
- un dispositif de mise en service (100) connecté en communication à la station de base de mise en service (200) et conçu pour déterminer une position à l'intérieur d'une zone délimitée détectée par le dispositif de mise en service (100) d'un dispositif de capteur (301) qui est couplé à la station de base de mise en service (200) par le biais d'un réseau de commande d'éclairage (300),
**caractérisé en ce que**
- le dispositif de mise en service (100) est conçu pour interagir avec la station de base de mise en service pour déclencher une réaction du dispositif de capteur (301) en envoyant un signal au dispositif de capteur (301) ou en interagissant avec le réseau de commande d'éclairage (300) pour déclencher la réaction ; et
- la station de base de mise en service est conçue pour créer une entrée de plan d'éclairage correspondante pour le dispositif de capteur (301) lors de la vérification de la réaction du dispositif de capteur (301), pour localiser le dispositif de capteur (301) dans un graphe de réseau représentant la topologie de réseau lors de l'occurrence de la réaction du dispositif de capteur (301), pour déterminer un dispositif d'éclairage (302) à proximité du dispositif de capteur (301) dans le graphe de réseau ; et pour déclencher le dispositif d'éclairage (302) ;
dans lequel le dispositif de mise en service (100) est conçu pour déterminer une position du dispositif d'éclairage (302) à l'intérieur d'une zone délimitée lors de la détection d'une réaction du dispositif d'éclairage déclenché (302) et dans lequel
le système est en outre conçu pour créer une entrée de plan d'éclairage pour le dispositif d'éclairage (302) et une entrée de scène d'éclairage associant le dispositif de capteur (301) au dispositif d'éclairage (302).

2. Système selon la revendication 1, dans lequel le dispositif de mise en service est un véhicule autonome, en particulier un véhicule terrestre, un vaisseau marin ou un véhicule aérien.

3. Système selon la revendication 1, dans lequel la création d'une entrée de plan d'éclairage ou d'une scène d'éclairage consiste à mettre à jour une entrée de plan d'éclairage ou une scène d'éclairage.

4. Système selon l'une des revendications 1 à 3, dans lequel le dispositif de mise en service (100) comprend :
- un module d'imagerie (131) et
- un module de prise de conscience situationnelle (130) ;
- une interface de communication permettant une communication avec la station de base de mise en service (200) ;
dans lequel le module de prise de conscience situationnelle (130) est conçu :
- pour traiter des données fournies par le module d'imagerie (131) pour construire un système de coordonnées relatives et un géoreprérage d'une zone délimitée, et
- pour détecter le dispositif de capteur (301) couplé en communication à la station de base de mise en service (200) à l'intérieur de la zone délimitée, et
- pour déterminer la position du dispositif de capteur (301) à l'intérieur de la zone délimitée ; et
dans lequel le dispositif de mise en service (100) est conçu :
- pour déclencher une réaction du dispositif de capteur (301) qui peut être reçue par la station de base de mise en service par le biais d'un réseau de commande d'éclairage (300),
- pour aider à la création d'une entrée de plan d'éclairage correspondante pour les dispositifs d'éclairage lors d'une vérification de la réaction par la station de base de mise en service (200),
- pour détecter une réaction du dispositif d'éclairage (302) déclenchée par la station de base de mise en service (200) qui est couplée en communication au dispositif d'éclairage (302) et
- pour aider à la création d'une entrée de plan d'éclairage pour le dispositif d'éclairage et d'une entrée de scène d'éclairage associant le dispositif de capteur (301) au dispositif d'éclairage (302).

5. Système selon la revendication 4, dans lequel le module d'imagerie comprend un capteur d'imagerie (133), un télémètre à laser (132), un scanner au laser ou des combinaisons de ces derniers.

6. Système selon la revendication 4, dans lequel le dispositif de mise en service (100) comprend en outre un système de commande de mouvement (110, 111, 112) connecté au module de prise de conscience situationnelle (130) et/ou une réception d'entrée en provenance d'un module de navigation (120) dans lequel le système de commande est conçu pour commander des mouvements autonomes du dispositif de mise en service (100).

7. Système selon la revendication 6, dans lequel le dispositif de mise en service (100) comprend en outre un microprocesseur (140), un module de mémoire (141) et un module de stockage (142), dans lequel le microprocesseur (140) est conçu pour faire fonctionner le système de commande de mouvement (110, 111, 112), le module de prise de conscience situationnelle (130), le module de navigation (120) ou des combinaisons de ces derniers.

8. Système selon la revendication 4, dans lequel le dispositif de mise en service (100) comprend en outre une antenne directionnelle pour une communication avec la station de base de mise en service (200).

9. Système selon la revendication 4, dans lequel le dispositif de capteur (301) est un dispositif de transmission de réseau.

10. Procédé pour mettre en service un dispositif d'éclairage (301, 302) à l'intérieur d'un réseau de commande d'éclairage (300) comprenant au moins un dispositif de capteur (301) couplé à une station de base de mise en service (200) par le biais d'un réseau de commande d'éclairage (300) ; dans lequel le procédé est **caractérisé en ce qu'**il comprend les étapes suivantes :
a) un dispositif de mise en service (100)
- déterminant une zone délimitée et créant un système de coordonnées relatives et un géorepérage de la zone délimitée ;
- déclenchant un événement entraînant une réaction du dispositif de capteur en envoyant un signal au dispositif de capteur (301) ou interagissant avec le réseau de commande d'éclairage (300) pour déclencher la réaction ;
- déterminant une position du dispositif de capteur (301) à l'intérieur du système de coordonnées relatives,
b) la station de base de mise en service (200) :
- créant une entrée de plan d'éclairage pour le dispositif de capteur (301) à stocker dans un plan d'éclairage (202) lors d'une vérification de la réaction du dispositif de capteur (301) et
- localisant le dispositif de capteur (301) dans un graphe de réseau représentant la topologie de réseau, et
- déterminant un dispositif d'éclairage (302) à proximité du dispositif de capteur (301) dans le graphe de réseau ; et
- déclenchant une réaction du dispositif d'éclairage (302) ; et
c) le dispositif de mise en service (100) en outre
- déterminant une position du dispositif d'éclairage (302) à l'intérieur du système de coordonnées relatives, et
d) un système comprenant la station de base de mise en service (200) et le dispositif de mise en service (100)
- créant une entrée de plan d'éclairage pour le dispositif d'éclairage (302) à stocker dans le plan d'éclairage (202) et une entrée de scène d'éclairage associant le dispositif de capteur (301) au dispositif d'éclairage (302).

11. Procédé selon la revendication 10, dans lequel l'entrée de plan d'éclairage comprend les coordonnées relatives du dispositif de capteur (301) et du dispositif d'éclairage (302).

12. Procédé selon la revendication 10, dans lequel le déclenchement de l'événement consiste à soumettre une demande pour changer un mode de fonctionnement du dispositif de capteur (301) et
dans lequel la détermination d'une position du dispositif de capteur (301) consiste à identifier le dispositif de capteur (301) en observant le mode de fonctionnement changé du dispositif de capteur (301).

13. Procédé selon la revendication 10, dans lequel le déclenchement de l'événement consiste à interagir avec le réseau de commande d'éclairage (300) pour créer un signal qui doit être détecté par le dispositif de capteur (301) et
dans lequel la création d'une entrée de plan d'éclairage consiste à créer l'entrée de plan d'éclairage lors de la détection d'un signal transmis par le dispositif de capteur (301) au réseau de commande d'éclairage (300) en réaction au signal détecté.
